# EUROPÄISCHE PATENTSCHRIFT

(11) **EP 3 172 418 B1**
(45) Veröffentlichungstag und Bekanntmachung des Hinweises auf die Patenterteilung: **26.09.2018**
(21) Anmeldenummer: 15748199.5
(22) Anmeldetag: 24.07.2015
(51) Int. Cl.: F02B 33/42, F04F 13/00, F02B 39/00, F02B 39/14

(54) **DRUCKWELLENLADER**
PRESSURE WAVE SUPERCHARGER
SYSTÈME DE SURALIMENTATION À ONDES DE PRESSION

(30) Priorität: 24.07.2014 EP 14178435; 11.08.2014 EP 14180557
(43) Veröffentlichungstag der Anmeldung: 31.05.2017
(73) Patentinhaber: Antrova AG, 8260 Stein am Rhein (CH)
(72) Erfinder: SKOPIL, Mario, CH-8903 Birmensdorf (CH)
(74) Vertreter: Fenner, Seraina
(86) Internationale Anmeldenummer: PCT/EP2015/066977
(87) Internationale Veröffentlichungsnummer: WO 2016/012582

(56) Entgegenhaltungen:
- DE-A1-102006 020 522
- DE-A1-102012 002 022
- FR-A- 1 154 867
- GB-A- 680 358
- GB-A- 1 522 299
- GB-A- 2 479 802
- US-A- 2 759 660
- US-A- 2 800 120

## Beschreibung

Die Erfindung betrifft einen Druckwellenlader.

### Stand der Technik

Bei mit Verbrennungsmotoren betriebenen Fahrzeugen erfordert die Gesetzgebung zunehmend niedrigere Schadstoffemissionen und insbesondere einen geringen Kraftstoffverbrauch. Der Wandlungsprozess von Kraftstoffenergie in mechanische Energie unterliegt dabei dem ideellen Carnotprozess, so dass der Wirkungsgrad eines Verbrennungsmotors auf maximal ca. 40% begrenzt ist. Die restliche in dem Kraftstoff enthaltene Energie wird als Verlustwärme über den Motorblock des Verbrennungsmotors oder über das Abgas abgegeben. Um den Wirkungsgrades von Verbrennungsmotoren weiter zu steigern werden Verbrennungsmotoren aufgeladen. Hierbei wird die zum Verbrennungsprozess benötigte angesaugte Frischluft komprimiert, so dass ein höherer Füllungsgrad des Zylinders bei einem Ladungswechselvorgang erreicht wird. Der höhere Füllungsgrad des Zylinders mit Frischluft ermöglicht eine höhere Einspeisung, beispielsweise Einspritzung von Kraftstoff und somit eine Erhöhung der Verbrennungsleistung pro Verbrennungstakt, bei gleichbleibender Reibleistung des Verbrennungsmotors. Hierdurch steigt die effektive Leistung des Verbrennungsmotors, so dass es möglich ist für eine gleiche zur Verfügung gestellte Leistung einen hubraumschwächeren Motor einzusetzen und somit den Kraftstoffverbrauch sowie den CO₂-Ausstoss zu senken.

Als Verdichter zum Aufladen eines Verbrennungsmotors ist insbesondere ein Druckwellenlader geeignet. Der Druckwellenlader, wie dieser beispielsweise aus der Druckschrift EP0235609A1 bekannt ist, nutzt dabei im direkten Gaskontakt die Energie der Abgasströmung zur Verdichtung der angesaugten Frischluft und wird in der häufigsten Bauform mit einem rotierenden Zellenrotor ausgebildet. Um eine effektive Wirkungsgradsteigerung des Verbrennungsmotors zu erreichen ist es von zentraler Bedeutung, dass der Aufladeprozess mittels Druckwellenlader ebenfalls mit einem hohen Wirkungsgrad erfolgt.

Bekannte Druckwellenlader weisen den Nachteil auf, dass der Spalt zwischen dem rotierenden Zellenrotor und feststehenden Teilen relativ gross ausgestaltet ist, um während dem Betrieb des Druckwellenladers eine mechanische Beschädigung des rotierenden Zellrotors zu vermeiden. Dieser relativ grosse Spalt hat einen reduzierten Wirkungsgrad zur Folge, sowohl während dem Betrieb, insbesondere jedoch auch während dem Kaltstart. Die Offenlegungsschrift DE 102012101922A1 offenbart einen Druckwellenlader mit reduzierter Spaltbreite. Nachteilig an dieser Vorrichtung ist, dass diese eine Klemmneigung aufweist, sodass nach dem Auftreten eines Klemmens eine Reduzierung der Spaltbreite nicht mehr möglich ist.

Die GB 680 358A wie auch die GB 1 522 299 offenbaren einen Druckaustauscher.

Die Dokumente FR1154867A und US2800120A offenbaren je einen Druckwellenlader umfassend ein Kaltgasgehäuse, ein Heissgasgehäuse, ein dazwischen angeordnetes Rotorgehäuse sowie einen innerhalb des Rotorgehäuses angeordneten Zellenrotor. Das Rotorgehäuse umfasst zwei Mantelteile, welche gegenseitig längsverschiebbar gelagert sind, um eine Längenveränderung des Zellenrotors zu kompensieren. Dieser Druckwellenlader weist den Nachteil auf, dass die längsverschiebbaren Mantelteile gegenseitig verklemmen können, was den Wirkungsgrad des Druckwellenladers erheblich reduziert. Zudem sind Dichtungen erforderlich, welche einen Verschleiss aufweisen.

### Darstellung der Erfindung

Aufgabe der Erfindung ist es einen zuverlässig betreibbaren Druckwellenlader mit erhöhtem Wirkungsgrad zu bilden.
Diese Aufgabe wird gelöst mit einem Druckwellenlader aufweisen die Merkmale von Anspruch 1. Die Unteransprüche 2 bis 13 betreffen weitere vorteilhafte Ausgestaltungen.

Diese Aufgabe wird insbesondere gelöst mit einem Druckwellenlader zum Verdichten von Frischluft für einen Verbrennungsmotor, umfassend ein Kaltgasgehäuse, ein Heissgasgehäuse sowie ein dazwischen angeordnetes Rotorgehäuse, wobei innerhalb des Rotorgehäuses ein rotierbarer Zellenrotor angeordnet ist, und wobei das Heissgasgehäuse einen Hochdruckabgaskanal und einen Niederdruckabgaskanal umfasst, und wobei das Kaltgasgehäuse einen Frischluftkanal und einen Ladeluftkanal umfasst, und wobei der Hochdruckabgaskanal, der Niederdruckabgaskanal, der Frischluftkanal und der Ladeluftkanal Fluid leitend mit dem Zellenrotor verbunden sind, wobei das Heissgasgehäuse ein erstes Lager und das Kaltgasgehäuse ein zweites Lager umfasst, und wobei der Zellenrotor eine Rotorwelle umfasst, welche im ersten und im zweiten Lager gelagert ist, wobei das Rotorgehäuse als ein einstückiges, rohrförmiges Mantelgehäuse ausgestaltet ist, welches mit dem Heissgasgehäuse sowie dem Kaltgasgehäuse verbunden ist, und wobei das Heissgasgehäuse einen Wärmetauscher umfasst welcher derart ausgestaltet ist, dass zumindest das erste Lager kühlbar ist, wobei der Wärmetauscher Kühlkanäle aufweist, welche innerhalb des Heissgasgehäuses verlaufen.

Die Aufgabe wird weiter insbesondere gelöst mit einem Druckwellenlader zum Verdichten von Frischluft für einen Verbrennungsmotor, umfassend ein Kaltgasgehäuse, ein Heissgasgehäuse sowie ein dazwischen angeordnetes Rotorgehäuse, wobei innerhalb des Rotorgehäuses ein rotierbarer Zellenrotor angeordnet ist, und wobei das Heissgasgehäuse einen Hochdruckabgaskanal und einen Niederdruckabgaskanal umfasst, und wobei das Kaltgasgehäuse einen Frischluftkanal und einen Ladeluftkanal umfasst, und wobei der Hochdruckabgaskanal, der Niederdruckabgaskanal, der Frischluftkanal und der Ladeluftkanal Fluid leitend mit dem Zellenrotor verbunden sind, und wobei das Heissgasgehäuse ein erstes Lager und das Kaltgasgehäuse ein zweites Lager umfasst, und wobei der Zellenrotor eine Rotorwelle umfasst, welche im ersten und im zweiten Lager gelagert ist, und wobei das Heissgasgehäuse einen Wärmetauscher umfasst welcher derart ausgestaltet ist, dass zumindest das erste Lager kühlbar ist.

Der erfindungsgemässe Druckwellenlader umfasst ein Heissgasgehäuse mit einem Wärmetauscher, wobei der Wärmetauscher derart angeordnet und ausgestaltet ist, dass dieser zumindest ein im Heissgasgehäuse angeordnetes erstes Lager für den Zellenrotor kühlt. In einer besonders vorteilhaften Ausgestaltung wird im Heissgasgehäuse zudem der vom Verbrennungsmotor zuströmende Hochdruckabgasstrom kühlt. Das vom Verbrennungsmotor zuströmende Abgas weist eine Abgastemperatur von bis zu etwa 1050 °C auf. Die Kühlung des zuströmenden Abgasstroms im Heissgasgehäuse hat zur Folge, dass das Heissgasgehäuse eine tiefere Temperatur aufweist, und dass der Abgasstrom mit einer tieferen Temperatur in den Zellenrotor einströmt, sodass auch der Zellenrotor eine tiefere Betriebstemperatur aufweist. Zudem hat die Kühlung des ersten Lagers zur Folge, dass der Zellenrotor über die Rotorwelle, welche im ersten Lager gelagert ist, zusätzlich gekühlt wird, was die Betriebstemperatur des Zellenrotors zusätzlich reduziert. Dies hat zur Folge, dass sowohl das Heissgasgehäuse als auch der Zellenrotor und das Rotorgehäuse während dem Erwärmen eine geringere Ausdehnung erfährt, beziehungsweise während dem Abkühlen ein geringeres Zusammenziehen aufweist. Der erfindungsgemässe Druckwellenlader weist den Vorteil auf, dass das Rotorgehäuse als einstückiges, rohrförmiges Mantelgehäuse ausgestaltet sein kann. Das Rotorgehäuse ist beispielsweise aus Eisenguss gefertigt. Die Kühlung ermöglich es ein erstes Lager für den Zellenrotor im Heissgasgehäuse anzuordnen. Dadurch ist es möglich den Zellenrotor im ersten Lager zu lagern, sodass die Stirnseite des Zellenrotors eine definierte Lage aufweist, und dadurch der Spalt zwischen der Stirnseite des Zellenrotors und der Stirnseite des Heissgasgehäuses klein und vorzugsweise in einem definierten Bereich gehalten werden kann. Der Zellenrotor ist beidseitig gelagert, in einem ersten Lager im Heissgasgehäuse, und in einem zweiten Lager im Kaltgasgehäuse. In einer vorteilhaften Ausgestaltung sind das erste Lager und/oder das zweite Lager zudem geschmiert, insbesondere ölgeschmiert oder fettgeschmiert. Die beidseitige Lagerung des Zellenrotors ermöglicht eine Abkehr von der bisher bekannten fliegenden Lagerung des Zellenrotors, welche den Nachteil hatte, dass sich eine trompetenförmige Verformung des Rotors bei hohen Temperaturen und Drehzahlen ergab. Der erfindungsgemässe Druckwellenlader weist den Vorteil auf, dass keine oder kaum eine trompetenförmige Verformung des Zellenrotors mehr auftritt. Der erfindungsgemässe Druckwellenlader weist den Vorteil auf, dass das Kaltspiel zwischen Zellenrotor und Heissgasgehäuse äusserst klein gehalten werden kann, und die Spaltbreite vorzugsweise in einem Bereich von 0,05 bis 0,2 mm liegt, vorzugsweise bei etwa 0,1 mm. Der erfindungsgemässe Druckwellenlader weist auf Grund dieser geringen Spaltbreite den Vorteil auf, dass die Kaltstarteigenschaften wesentlich verbessert sind, da der Druckwellenlader auf Grund der geringen Spaltbreite bereits während der Kaltstartphase einen genügend hohen Ladedruck erzeugen kann. Der erfindungsgemässe Druckwellenlader erzeugt bereits bei einer Temperatur im Bereich von beispielsweise etwa 200 °C einen genügend hohen Ladedruck.

In einer besonders vorteilhaften Ausgestaltung umfasst das Heissgasgehäuse eine Lagersitzwand, welche auf der dem ersten Lager zugewandten Seite als ein Lagersitz für das erste Lager ausgestaltet ist, wobei das erste Lager im Lagersitz angeordnet ist, und wobei die Lagersitzwand auf der dem ersten Lager abgewandten Seite Teil einer Kühlkanalaussenwand eines Kühlkanals des Wärmetauschers bildet. Dadurch kann eine hohe Wärmemenge aus dem ersten Lager abgeführt werden.

In einer vorteilhaften Ausführungsform ist der Zellenrotor in Verlaufsrichtung der Rotorwelle zumindest zweiteilig ausgestaltet und umfasst ein erstes Zellenrotorteil und ein zweites Zellenrotorteil, wobei die Zellenrotorteile in Verlaufsrichtung der Rotorwelle unter Ausbildung eines Spaltes bzw. eines Rotorspaltes gegenseitig beabstandet sind. Das erste, im Heissgasgehäuse angeordnete Lager ist gekühlt. Zudem ist der Zellenrotor im ersten Lager vorzugsweise derart gelagert, dass die Stirnseite des Zellenrotors eine definierte Lage aufweist, sodass der Spalt zwischen der Stirnseite des Zellenrotors und der Stirnseite des Heissgasgehäuses klein gehalten werden kann und sich auf Grund von Temperaturveränderungen vorzugsweise nicht verändert, wobei eine Erwärmung des Zellenrotors zur Folge hat, dass dieser eine Längenausdehnung erfährt, wobei der Spalt zwischen der Stirnseite des Zellenrotors und der Stirnseite des Heissgasgehäuses im Wesentlichen konstant bleibt, wogegen die Breite des Rotorspalts reduziert wird. Der erfindungsgemässe Druckwellenladers weist deshalb auch im warmen Zustand einen hohen Wirkungsgrad auf.

Der Zellenrotor ist vorteilhafterweise auch im zweiten Lager derart gelagert, sodass die Stirnseite des Zellenrotors eine definierte Lage aufweist, sodass der Spalt zwischen der Stirnseite des Zellenrotors und der Stirnseite des Kaltgasgehäuses klein gehalten werden kann, wobei eine Erwärmung des Zellenrotors wiederum zur Folge hat, dass die Breite des Rotorspalts reduziert wird. Eine Erwärmung des Zellenrotors während dem Betrieb hat somit im Wesentlichen eine Änderung der Breite des Rotorspalts zur Folge.

In einer vorteilhaften Ausgestaltung wird die Kühlleistung des Wärmetauschers derart geregelt, dass während dem Kaltstart nur mit einer geringen Kühlleistung oder gar nicht gekühlt wird, damit der Druckwellenlader in möglichst kurzer Zeit auf die erforderliche Betriebstemperatur von beispielsweise etwa 200°C gelangt. Die Kühlleistung wird ab einer gewissen Betriebstemperatur, beispielsweise ab 300°C, erhöht, um das einströmende Abgas zu kühlen.

In einer besonders vorteilhaften Ausgestaltung ist der Wärmetauscher zudem derart ausgestaltet, dass dieser auch den aus dem Druckwellenlader ausströmenden Abgasstrom kühlt, vorzugsweise indem der Niederdruckabgaskanal gekühlt wird.

Vorteilhafterweise umschliesst ein Kühlkanal den Hochdruckabgaskanal und/oder den Niederdruckabgaskanal zumindest entlang eines Kühlabschnittes vollständig, sodass der Hochdruckabgaskanal und/oder der Niederdruckabgaskanal beim Kühlabschnitt entlang der gesamten Umfangsfläche gekühlt werden. Somit kann dem Hochdruckabgaskanal und/oder dem Niederdruckabgaskanal beziehungsweise dem darin strömenden Gas besonders viel Wärme entzogen werden.

Der erfindungsgemässe Druckwellenlader weist den weiteren Vorteil auf, dass eine Nachentzündung unverbrannter Kohlenwasserstoffe in der Auspuffanlage nicht oder kaum mehr auftritt, da die Temperatur des der Auspuffanlage zugeleiteten Abgasstroms und vorzugsweise auch die Temperatur des Heissgasgehäuses deutlich reduziert ist. So kann der das Heissgasgehäuse verlassende Abgasstrom beispielweise eine Temperatur von etwa 700 °C oder eine Temperatur von unter 700 °C aufweisen. Das Heissgasgehäuse kann an der Oberfläche beispielsweise eine Temperatur von etwa 120 °C aufweisen. Vorteilhafterweise ist der Wärmetauscher als im Heissgasgehäuse verlaufende Kanäle ausgestaltet, durch welche als Kühlmedium Wasser fliesst. Ein derart ausgestalteter Wärmetauscher ist besonders geeignet das Heissgasgehäuse zu kühlen, sodass es beispielsweise möglich ist das Heissgasgehäuse aus Aluminium, einer Aluminiumlegierung oder einer Leichtmetalllegierung zu bilden. Ein Heissgasgehäuse gefertigt aus einem derartigen Metall nimmt während dem Betrieb keinen thermischen Schaden, da das Metall eine hohe Wärmeleitung aufweist, und das Heissgasgehäuse derart gekühlt wird, dass keine Überhitzung auftritt.

Der erfindungsgemässe Druckwellenlader weist zudem den Vorteil auf, dass durch die Kühlung des Abgasstroms der Volumenstrom des Abgases reduziert wird, was zur Folge hat, dass entweder die Dimension der Abgasleitungen im Druckwellenlader reduziert werden kann, oder dass ein bestehender Druckwellenlader mit erhöhter Abgasförderkapazität betrieben werden kann.

Der erfindungsgemässe Druckwellenlader weist zudem den Vorteil auf, dass dieser mit weniger temperaturfesten Werkstoffen und somit mit günstigeren Werkstoffen ausgebildet werden kann, insbesondere das Heissgasgehäuse und das Kaltgasgehäuse, jedoch auch der Zellenrotor. In einer besonders vorteilhaften Ausgestaltung wird zumindest das Heissgasgehäuse aus Aluminium, einer Aluminiumlegierung oder einer sonstigen Leichtmetalllegierung ausgestaltet, um ein gewichtsmässig leichteres Heissgasgehäuse auszubilden, und um vorzugsweise ein Heissgasgehäuse mit erhöhter Wärmeleitfähigkeit auszubilden. Ein derartiger Druckwellenlader weist den Vorteil auf, dass dieser besonders leicht ausgestaltet ist, und dass der Abgasstrom besonders effizient gekühlt werden kann. Ein Heissgasgehäuse aus Aluminium oder einer entsprechenden Legierung weist den Vorteil auf, dass Aluminium eine kleine Wärmeträgheit aufweist, sodass sich das Heissgasgehäuse sehr schnell erwärmt, sodass der Druckwellenlader bei einem Kaltstart in sehr kurzer Zeit die erforderliche Betriebstemperatur aufweist. Ein Verbrennungsmotor ausgerüstet mit einem erfindungsgemässen Druckwellenlader weist somit vorteilhafte Kaltstarteigenschaften auf. Dies hat zur Folge, dass der Druckwellenlader, beispielsweise bei einem Benzinmotor mit kleinem Hubraum, sehr schnell nach dem Kaltstart Wirkung zeigt, was beispielsweise ein besseres Beschleunigungsverhalten und eine geringere Schadstoffemission zur Folge hat. Der erfindungsgemässe Druckwellenlader ist insbesondere in Kombination mit Benzinmotoren geeignet, das der Benzinmotor hohe Abgastemperaturen von bis zu beispielsweise 1050°C aufweist. Ein Dieselmotor hat tiefere Abgastemperaturen.

In einer besonders vorteilhaften Ausgestaltung ist der Zellenrotor zweigeteilt, und umfasst in Verlaufsrichtung der Rotorwelle ein erstes Zellenrotorteil und nachfolgend ein zweites Zellenrotorteil, wobei die beiden Zellenrotorteile in Verlaufsrichtung der Rotorwelle unter Ausbildung eines Rotorspaltes gegenseitig beabstandet sind. Vorteilhafterweise ist ein derartiger Zellenrotor derart ausgebildet, dass eine Erwärmung der Zellenrotorteile zur Folge hat, dass sich der Rotorspalt verkleinert. Der Rotorspalt ist vorzugsweise in der Mitte des Zellenrotors angeordnet. Diese Ausgestaltung weist den Vorteil auf, dass die Druckdifferenz in der Mitte zwischen dem ersten und zweiten Zellenrotorteil relativ klein ist, sodass der durch den Spalt verursachte Wirkungsgradverlust relativ klein ist. Der Zellenrotor könnte jedoch auch eine höhere Teilungszahl aufweisen, und beispielsweise drei, vier oder fünf Zellenrotorteile aufweisen, zwischen welchen sich je ein Rotorspalt befindet. Der Rotorspalt kann jedoch auch ausserhalb der Mitte des Zellenrotors angeordnet sein.

Der Wärmetauscher umfasst vorteilhafterweise eine Wasserkühlung, insbesondere derart, dass im Heissgasgehäuse Kühlkanäle angeordnet sind, welche vom Kühlwasser durchströmt sind.

Der Zellenrotor ist vorteilhafterweise aktiv angetrieben, beispielsweise durch einen Riemenantrieb, oder insbesondere durch einen Elektromotor, der vorteilhafterweise im Kaltgasgehäuse angeordnet ist.

### Kurze Beschreibung der Zeichnungen

Die zur Erläuterung der Ausführungsbeispiele verwendeten Zeichnungen zeigen:
- Fig. 1: einen Längsschnitt durch einen teilweise schematisch dargestellten Druckwellenlader;
- Fig. 2: eine Prinzipdarstellung der Gasführung im Zellenrotor;
- Fig. 3: einen Längsschnitt durch ein geteilten Zellenrotor;
- Fig. 4: einen Längsschnitt durch ein weiteres Ausführungsbeispiel eines geteilten Zellenrotors;
- Fig. 5: eine Frontansicht eines Heissgasgehäuses;
- Fig. 6: eine Seitenansicht eines Druckwellenladers;
- Fig. 7: einen Schnitt durch den Druckwellenlader entlang der Schnittlinie A-A gemäss Figur 6;
- Fig. 8: einen Längsschnitt durch ein weiteres Ausführungsbeispiel eines Druckwellenladers;
- Fig. 9: eine perspektivische Ansicht der Vorderseite eines Zellenrotors;
- Fig. 10: eine perspektivische Ansicht der Rückseite eines Zellenrotors;
- Fig. 11: eine Seitenansicht eines geteilten Zellenrotors;
- Fig. 12: einen Längsschnitt durch einen geteilten Zellenrotor.

Grundsätzlich sind in den Zeichnungen gleiche Teile mit gleichen Bezugszeichen versehen.

### Wege zur Ausführung der Erfindung

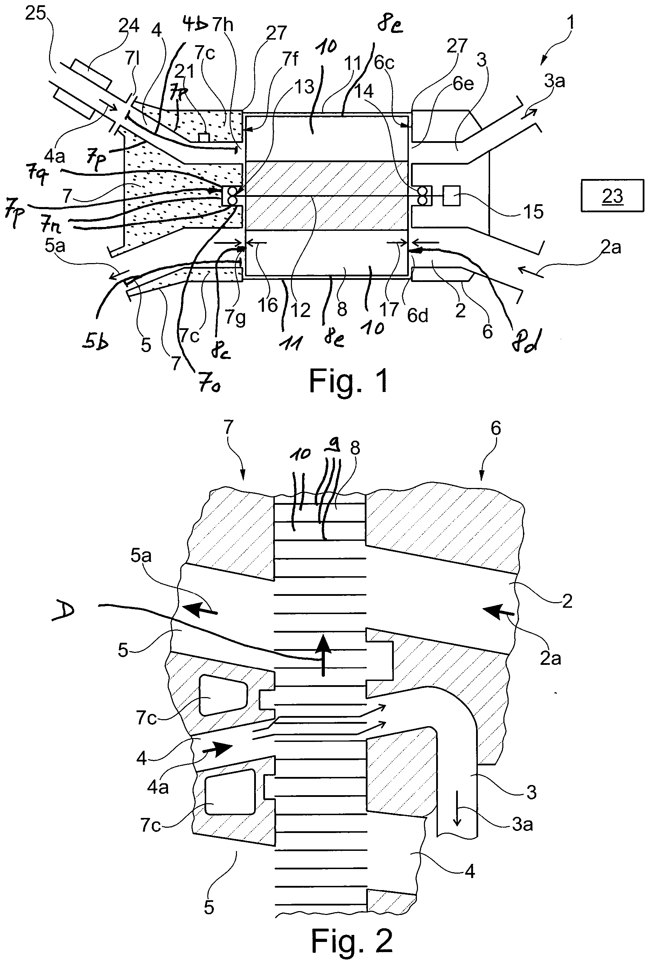

Figur 1 zeigt schematisch einen Druckwellenlader 1 zum Verdichten von Frischluft 2a für einen nicht dargestellten Verbrennungsmotor, dem eine verdichtete Frischluft, auch als Ladeluft 3a bezeichnet, zugeführt wird. Der Druckwellenlader 1 umfasst ein Kaltgasgehäuse 6, ein Heissgasgehäuse 7 sowie ein dazwischen angeordnetes Rotorgehäuse 11, wobei innerhalb des Rotorgehäuses 11 ein rotierbarer Zellenrotor 8 angeordnet ist. Der Zellenrotor 8 umfasst eine Rotorwelle 12, welche an beiden Enden in je einem ersten beziehungsweise einem zweiten Lager 13,14 drehbar gelagert ist. Das erste Lager 13 ist im Heissgasgehäuse 7 angeordnet, wogegen das zweite Lager 14 im Kaltgasgehäuse 6 angeordnet ist. Das Heissgasgehäuse 7 umfasst einen Hochdruckabgaskanal 4 und einen Niederdruckabgaskanal 5, wobei der vom Motor einströmende Hochdruckabgasstrom 4a dem Hockdruckabgaskanal 4 zugeführt wird, und wobei der aus dem Niederdruckabgaskanal 5 ausströmende Niederdruckabgasstrom 5a einem Auspuff zugeleitet wird. Das Kaltgasgehäuse 6 umfasst einen Frischluftkanal 2 und einen Ladeluftkanal 3. Das Kaltgasgehäuse 6 könnte in einer weiteren Ausführungsform auch mehrere Frischluftkanäle 2 und mehrere Ladeluftkanäle 3 umfassen, vorzugsweise je zwei. Das Heissgasgehäuse 7 könnte in einer weiteren Ausführungsform auch mehrere Hochdruckabgaskanäle 4 und mehrere Niederdruckabgaskanäle 5 umfassen, vorzugsweise je zwei. Der Hochdruckabgaskanal 4, der Niederdruckabgaskanal 5, der Frischluftkanal 2 und der Ladeluftkanal 3 sind in der für einen Druckwellenlader üblich, jedoch nur schematisch dargestellten Anordnung Fluid leitend mit dem Zellenrotor 8 verbunden ist, wobei der Zellenrotor 8 Rotorzellen 10 aufweist, welche eine in Verlaufsrichtung des Zellenrotors 8 durchgehende, Fluid leitende Verbindung ausbildet, welche von der ersten Stirnseite 8c bis zur zweiten Stirnseite 8d des Zellenrotors 8 verläuft, um die angesaugte Frischluft 2a mit Hilfe des Hochdruckabgasstroms 4a zu verdichten und als Ladeluft 3a dem Verbrennungsmotor zuzuführen. Das Heissgasgehäuse 7 weist an der zum Zellenrotor 8 hin ausgerichteten Stirnseite 7f eine Einlassöffnung 7h sowie eine Auslassöffnung 7g auf. Zwischen dieser Stirnseite 7f und dem Zellenrotor 8 besteht ein Spalt 16. Der Spalt 16 weist vorzugsweise eine Breite im Bereich von 0,05 bis 0,2 mm auf, und insbesondere eine Breite von etwa 0,1 mm. Das Kaltgasgehäuse 6 weist an der zum Zellenrotor 8 hin ausgerichteten Stirnseite 6c eine Einlassöffnung 6d sowie eine Auslassöffnung 6e auf. Zwischen dieser Stirnseite 6c und dem Zellenrotor 8 besteht ein Spalt 17. Der Zellenrotor 8 weist eine Zellenrotoraussenwand 8e auf, welche die Rotorzellen 10 begrenzt.

Das Heissgasgehäuse 7 umfasst einen teilweise schematisch dargestellten Wärmetauscher 7c, wobei der Wärmetauscher 7c derart ausgestaltet ist, dass zumindest das erste Lager 13 gekühlt wird.

Vorteilhafterweise umfasst das Heissgasgehäuse 7 eine Lagersitzwand 7n, welche auf der dem ersten Lager 13 zugewandten Seite als ein Lagersitz 7o für das erste Lager 13 ausgestaltet ist, wobei das erste Lager 13 im Lagersitz 7o angeordnet ist, und wobei die Lagersitzwand 7n auf der dem ersten Lager 13 abgewandten Seite Teil einer Kühlkanalaussenwand 7p eines Kühlkanals 7d des Wärmetauschers 7c bildet.

Besonders vorteilhaft ist der Wärmetauscher 7c derart ausgestaltet, dass auch der Hochdruckabgaskanal 4 kühlbar ist, und somit der durch den Hochdruckabgaskanal 4 strömende Hochdruckabgasstrom 4a gekühlt wird. Vorteilhafterweise umfasst der Wärmetauscher 7c einen Kühlkanal 7e, welcher den Hochdruckabgaskanal 4 zumindest entlang eines Kühlabschnittes 4b vollständig umschliesst, sodass die Aussenwand des Hochdruckabgaskanals 4 zugleich ein Teil der Kühlkanalaussenwand 7p bildet.

Der Kühlstrom ist vorzugsweise derart im Wärmetauscher 7c geleitet, dass das Kühlmittel zuerst das erste Lager 13 kühlt und danach dem Hochdruckabgaskanal 4 zugeleitet wird um diesen zu kühlen. Das Kühlmittel fliesst vorzugsweise in Kühlkanälen, die sich in der Aussenwand des Hochdruckabgaskanals 4 befinden. In einer weitere vorteilhaften Ausgestaltung ist der Wärmetauscher 7c derart ausgestaltet, dass zudem auch der Niederdruckabgaskanal 5 kühlbar ist, sodass der durch diesen Kanal strömende Niederdruckabgasstrom 5a gekühlt wird. Als Kühlmittel wird vorzugsweise Wasser verwendet. In einer vorteilhaften Ausgestaltung sind die Kühlkanäle mit dem Wasserkreislauf eines Verbrennungsmotors verbunden, sodass dieser das Kühlwasser liefert und die Umwälzung bewirkt. Die Rotorwelle 12 ist im dargestellten Ausführungsbeispiel von einem im Kaltgasgehäuse 6 angeordneten Elektromotor 15 angetrieben. Die Rotorwelle 12 könnte beispielsweise auch von einem Riemenantrieb angetrieben sein.

In einer vorteilhaften Ausgestaltung ist im Druckwellenlader 1 ein Sensor 21 angeordnet zur Erfassung der Temperatur des Hochdruckabgasstroms 4a, der Temperatur des Niederdruckabgasstroms 5a, oder einer damit zusammenhängenden Grösse, wobei der Sensor 21 Signal übertragend mit einer Regelvorrichtung 23 verbunden ist. Der Wärmetauscher 7c ist Fluid leitend mit einer nicht dargestellten Wärmeabgabevorrichtung verbunden, sodass ein Wasserkreislauf ausgebildet wird, der auch eine nicht dargestellte Umwälzpumpe umfasst. In einer bevorzugten Ausgestaltung ist die Umwälzpumpe von der Regelvorrichtung 23 ansteuerbar, sodass die Kühlleistung des Wärmetauschers 7c ansteuerbar ist, vorzugsweise in Abhängigkeit einer vom Sensor 21 gemessenen Temperatur.

Figur 2 zeigt in einer Prinzipdarstellung die Gasführung in einem Druckwellenlader mit Zellenrotor 8. Der Zellenrotor 8 ist in Drehrichtung D drehbar gelagert. Der Zellenrotor 8 umfasst eine Mehrzahl von in Drehrichtung D beabstandet angeordneten Zellenwänden 9, welche Rotorzellen 10 begrenzen. Der Zellenrotor 8 beziehungsweise die Rotorzellen 10 enden, wie in Figur 1 dargestellt, in Verlaufsrichtung an einer ersten beziehungsweise an einer zweiten Stirnseite 8c, 8d. Der Zellenrotor 8 beziehungsweise die Rotorzellen 10 sind in Verlaufsrichtung des Zellenrotors 8 beziehungsweise der Rotorwelle 12 durchgehend ausgestaltet, um eine in Verlaufsrichtung des Zellenrotors 8 bzw. der Rotorwelle 12 durchgehende, unbehinderte Fluid leitende Verbindung zwischen der ersten und zweiten Stirnseite 8c, 8d auszubilden. In den rotierenden Zellenrotor 8 strömen durch den Frischluftkanal 2 angesaugte Frischluft 2a und durch den Hochdruckabgaskanal 4 das von dem Verbrennungstakt kommende Abgas 4a. Die angesaugte Frischluft 2a wird von dem Druck des Abgases 4a komprimiert und anschließend über den Ladeluftkanal 3 dem Verbrennungsmotor auf einer Ansaugseite zugeführt und strömt dann in den Zylinder in dem ein Ladungswechselvorgang stattfindet und wird dort mit Kraftstoff vermengt und verbrannt. Im Anschluss daran wird das Abgas 4a durch den Hochdruckabgaskanal 4 dem Druckwellenlader 1 wiederum zugeführt. Nach der Verdichtung der Frischluft 2a durch das Abgas 4a wird das nicht mehr benötigte Abgas 5a vom Zellenrotor 8 in einen Niederdruckabgaskanal 5 entlassen und dem weiteren Abgasstrang zugeführt.

Im Heissgasgehäuse 7 verläuft ein Hochdruckabgaskanal 4, welcher dem Zellenrotor 8 zugeführt ist. Im Heissgasgehäuse 7 ist zudem ein Wärmetauscher 7c angeordnet, der im dargestellten Ausführungsbeispiel als Wasserkanäle 7d ausgestaltet ist, welche den Hochdruckabgaskanal 4 umgeben um dessen Innenwände zu kühlen und um dadurch den durchströmenden Hochdruckabgasstrom 4a zu kühlen. Im dargestellten Ausführungsbeispiel ist der Wärmetauscher 7c beziehungsweise die Wasserkanäle 7d Teil des Heissgasgehäuses 7. In einer bevorzugten, nicht dargestellten Ausgestaltung sind die Wasserkanäle 7d zuerst demjenigen Bereich des Heissgasgehäuses 7 zugeleitet, in welchem das erste Lager 13 angeordnet ist, um zuerst das erste Lager 13 zu kühlen, bevor derjenige Teil des Heissgasgehäuses 7 gekühlt wird, welcher den Hochdruckabgaskanal 4 umschliesst. In einer vorteilhaften, nicht dargestellten Ausführungsform, könnten auch im Bereich des Niederdruckabgaskanals 5 ein Wärmetauscher 7c, insbesondere Wasserkanäle 7d angeordnet sein, um den Niederdruckabgasstrom 5a zu kühlen.

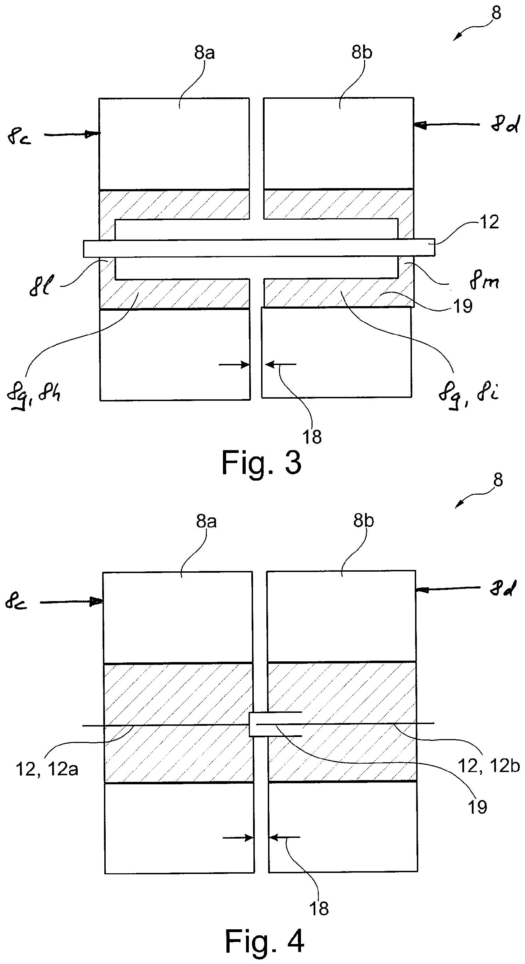

Figur 3 zeigt ein erstes Ausführungsbeispiel eines Zellenrotors 8, der in Verlaufsrichtung der Rotorwelle 12 zweiteilig ausgestaltet ist und ein erstes Zellenrotorteil 8a mit einem ersten Lagerteil 8h und ein zweites Zellenrotorteil 8b mit einem zweiten Lagerteil 8i umfasst, wobei die beiden Zellenrotorteile 8a, 8b beziehungsweise die beiden Lagerteile 8h, 8i einen gegenseitigen Spalt 18 ausbilden, sodass die beiden Zellenrotorteile 8a, 8b unter Ausbildung eines Spaltes 18 gegenseitig beabstandet sind. Die zwischen der ersten und zweiten Stirnseite 8c, 8d durchgehend verlaufenden Rotorzellen 10 sind am Übergang zwischen erstem und zweiten Zellenrotorteil 8a, 8b ebenfalls um den Spalt 18 beabstandet, wobei der Spalt 18 den Fluidfluss in der durchgehend von der ersten zur zweiten Stirnseite 8c, 8d verlaufenden Rotorzelle 10 nicht behindert. Beide Zellenrotorteile 8a, 8b sind über die Rotorwelle 12 miteinander verbunden und drehen in dieselbe Drehrichtung D. Die Lagerteile 8h, 8i sind an deren Endabschnitte 81, 8m fest mit der Rotorwelle 12 verbunden. Eine Erwärmung des Zellenrotors 8 hat zur Folge, dass sich die Zellenrotorteile 8a, 8b ausdehnen, sodass sich der Spalt 18 verkleinert. Eine Abkühlung des Zellenrotors 8 hat zur Folge, dass sich der Spalt 18 vergrössert. Die in Figur 3 dargestellte Ausführungsform weist den Vorteil auf, dass der Spalt 16 zwischen der Stirnseite 7f des Heissgasgehäuses 7 und dem ersten Zellenrotorteil 8a während dem Betrieb des Druckwellenladers 1 konstant oder im Wesentlichen konstant bleibt, unabhängig von der Temperatur des Zellenrotorteils 8a, da die sich auf Grund der Erwärmung ergebende Änderung der Länge des Zellenrotorteils 8a bezüglich der Breite des Spaltes 18 auswirkt. In einer vorteilhaften Ausgestaltung beträgt die Breite des Spaltes 18 im Kaltzustand des Zellenrotors 8 0,4 mm, wobei sich diese Breite während dem Betrieb des Druckwellenladers 1 auf Grund der Erwärmung des Zellenrotors 8 verkleinert auf einen Wert von vorzugsweise unter 0,2mm. In einer besonders vorteilhaften Ausgestaltung schliesst sich der Spalt 18 auf Grund der Erwärmung vollständig. Während einem Abkühlen des Zellenrotors 8 vergrössert sich der Spalt 18 wieder bis zum Kaltzustand.

Figur 4 zeigt ein weiteres Ausführungsbeispiel eines Zellenrotors 8, der in Verlaufsrichtung der Rotorwelle 12 zumindest zweiteilig ausgestaltet ist und ein erstes Zellenrotorteil 8a mit einer ersten Rotorteilwelle 12a und ein zweites Zellenrotorteil 8b mit einer zweiten Rotorteilwelle 12b umfasst, wobei die beiden Zellenrotorteile 8a, 8b beziehungsweise die beiden Rotorteilwellen 12a, 12b über eine Kupplung 19 miteinander verbunden sind. Die beiden Zellenrotorteile 8a, 8b weisen einen Rotorspalt 18 auf. Die beiden Rotorteilwellen 12a, 12b sind in der Kupplung 19 gegenseitig verschiebbar gelagert, sodass eine Temperaturveränderung des Zellenrotors 8 eine Veränderung der Spaltbreite 18 zur Folge haben kann.

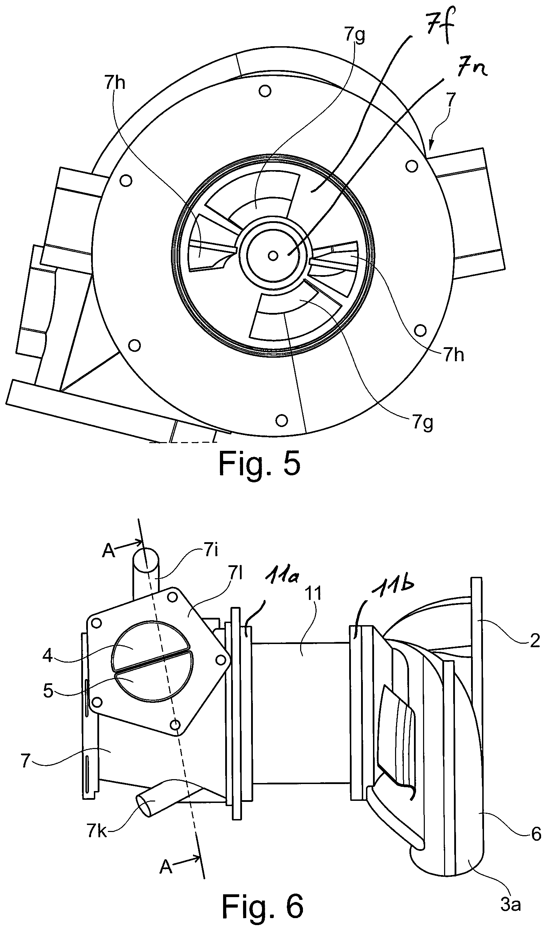

Figur 5 zeigt die Stirnseite 7f eines Heissgasgehäuses 7, wobei an der Stirnseite 7f, in Umfangsrichtung beabstandet, nacheinander folgend eine Einlassöffnung 7h und nachfolgend eine Auslassöffnung 7g angeordnet ist, wobei nachfolgend nochmals eine Einlassöffnung 7h und nachfolgend eine Auslassöffnung 7g angeordnet sind. Ein Druckwellenlader 1 umfassend das in Figur 5 dargestellte Heissgasgehäuse 7 ist derart ausgestaltet, dass dieser eine Gasführung aufweist, welche aus zwei übereinander angeordneten Gasführungen besteht, wie diese in Figur 2 dargestellt ist.

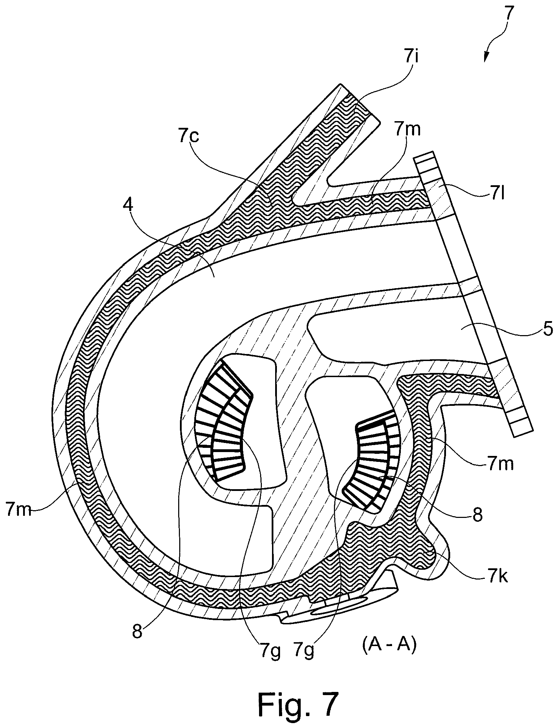

Figur 6 zeigt in einer Seitenansicht ein weiteres Ausführungsbeispiel eines Druckwellenladers 1 mit Heissgasgehäuse 7, Rotorgehäuse 11 und Kaltgasgehäuse 6, wobei das Heissgasgehäuse 7 einen Flansch 71 umfasst, an dem der Hochdruckabgaskanal 4 und der Niederdruckabgaskanal 5 mündet. Das Rotorgehäuse 11 weist zwei Flansche 11a, 11b auf, welche am Heissgasgehäuse 7 beziehungsweise am Kaltgasgehäuse 6 befestigt sind. Zudem ist ein Kühlwassereinlass 7i sowie ein Kühlwasserauslass 7k dargestellt, über welche ein Kühlwasseraustausch mit dem im Heissgasgehäuse 7 angeordneten Wärmetauscher 7c stattfindet. Figur 7 zeigt einen Schnitt durch Figur 6 entlang der Schnittlinie A-A. Der Hochdruckabgaskanal 4 sowie der Niederdruckabgaskanal 5 sind zumindest teilweise von einem Wassermantel 7m umgeben, der sich innerhalb des Wärmetauschers 7c befindet, wobei das Wasser über die Zu- und Ableitung 7i, 7k ausgetauscht und ausserhalb des Heissgasgehäuses 7 gekühlt wird. Das Heissgasgehäuse 7 ist vorzugsweise abschnittweise doppelwandig ausgestaltet, um zwischen den beabstandeten Wänden den Wärmetauscher 7c auszubilden. Aus Figur 7 sind zudem die zwei Auslassöffnungen 7g sowie ein Teil des dahinter angeordneten Zellenrotors 8 sowie dessen Rotorzellen ersichtlich.

Die Kühlvorrichtung umfassend den Wärmetauscher 7c kann auf unterschiedliche Weise ausgestaltet sein, und könnte zum Beispiel auch als Dampfkreislauf ausgestaltet sein, mit heat pipes und einem Dampfkreislauf mit Phasenveränderung.

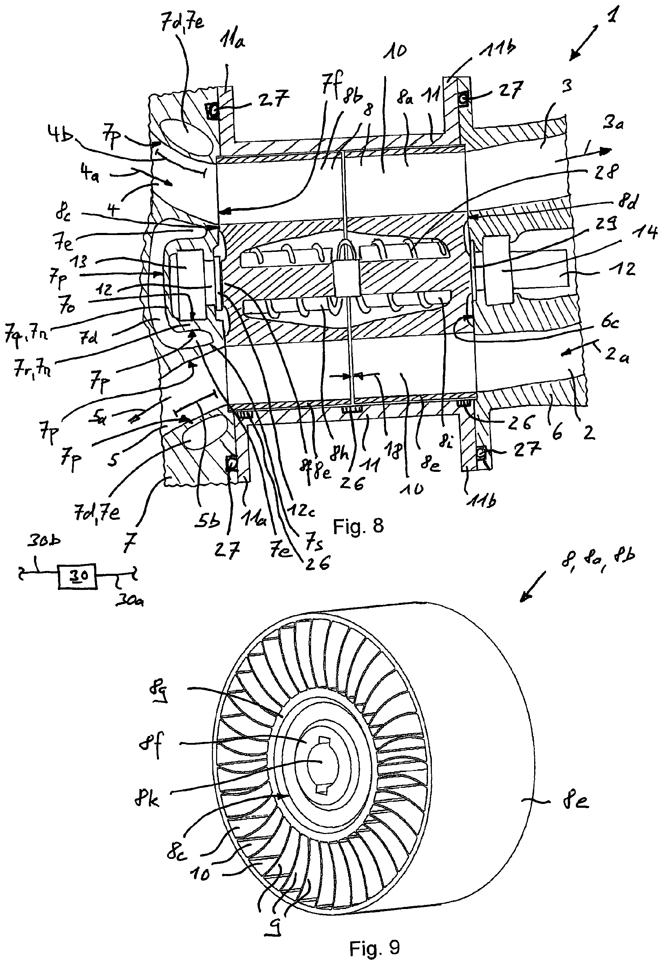

Die Kühlung des Druckwellenladers 1 hat zur Folge, dass dieser während dem Betrieb eine tiefere Temperatur aufweist. Dies ergibt den Vorteil, dass, wie in Figur 8 dargestellt, zur Dichtung zwischen dem Kaltgehäuse 6 und dem Rotorgehäuse 11 und/oder zwischen dem Heissgasgehäuse 7 und dem Rotorgehäuse 11 Dichtringe 27 beziehungsweise O-Ringe zur Abdichtung verwenden werden können, wobei die Dichtringe 27 aus Metall oder Kunststoff bestehen, vorzugsweise aus einem dauerelastischen Material wie Silikon. Der Dichtring 27 verläuft in Umfangsrichtung um 360 Grad.

Wie in Figur 1 dargestellt kann es sich zudem als vorteilhaft erweisen einen zusätzlichen Wärmetauscher 24 anzuordnen, um eine Hochdruckabgaszufuhrleitung 25 zu kühlen, wobei die Hochdruckabgaszufuhrleitung 25 im Abgasflussrichtung vorgängig dem Hochdruckabgaskanal 4 angeordnet ist.

Figur 8 zeigt in einem Längsschnitt ein weiteres Ausführungsbeispiel eines Druckwellenladers 1 mit geteiltem, drehbar gelagertem Zellenrotor 8. Das Rotorgehäuse 11 ist als einstückiges, rohrförmiges Mantelgehäuse ausgestaltet, und ist über Flansche 11a, 11b mit dem Heissgasgehäuse 7 sowie dem Kaltgasgehäuse 6 verbunden. Das Heissgasgehäuse 7 ist aus Aluminium oder einer Leichtmetalllegierung gefertigt. Die Rotorwelle 12 ist durchgehend ausgestaltet und im ersten Lager 13 sowie im zweiten Lager 14 drehbar gelagert. Ein Bund 12c ist fest mit der Rotorwelle 12 verbunden. Das erste sowie das zweite Zellenrotorteil 8a, 8b sind über Lagerteile 8h, 8i auf der Rotorwelle 12 verschiebbar gelagert. Eine Feder 28 bewirkt eine abstossende Kraft, sodass die beiden Zellenrotorteile 8a, 8b unter einer Vorspannung am Bund 12c beziehungsweise an einer Anschlagscheibe 29 anliegen.

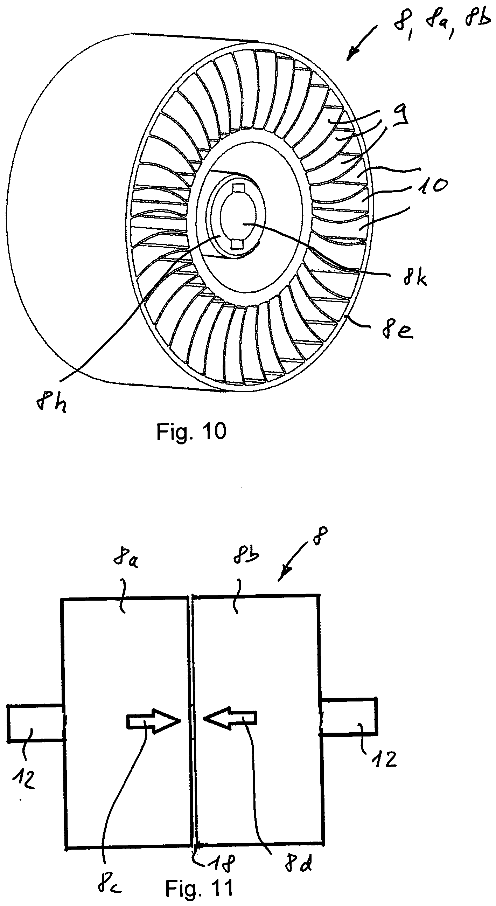

Die Figuren 9 und 10 zeigen in einer perspektivischen Ansicht die Vorderseite bzw. die Rückseite der in Figur 8 dargestellten Zellenrotorteile 8a, 8b. Beide Zellenrotorteile 8a, 8b sind identisch ausgestaltet. Das Zellenrotorteil 8a, 8b umfasst eine Zellenrotoraussenwand 8e, eine Zellenrotorinnenwand 8g sowie eine Vielzahl von Zellenwänden 9, sodass Rotorzellen 10 ausgebildet sind. Das Zellenrotorteil 8a, 8b umfasst zudem eine erste Stirnseite8c umfassend einen Anschlag 8f sowie eine Ausnehmung 8k für die Rotorwelle 12. Das Zellenrotorteil 8a, 8b umfasst zudem ein Lagerteil 8h.

Die beiden Zellenrotorteil 8a, 8b liegen über den Anschlag 8f am Bund 12c beziehungsweise an der Anschlagscheibe 29 an, wobei diese derart angepasst angeordnet sind, dass sich zwischen der ersten Stirnseite 8c des ersten Zellenrotorteils 8a und der Stirnseite 7f des Heissgasgehäuses 7 ein Spalt 16 mit definierter Spaltbreite ergibt, und wobei diese derart angepasst angeordnet sind, dass sich zwischen der zweiten Stirnseite 8d des zweiten Zellenrotorteils 8b und der Stirnseite 6c des Kaltgasgehäuses 6 ein Spalt 17 mit definierter Spaltbreite ergibt. Eine Temperaturveränderung im Druckwellenlader 1 hat somit zur Folge, dass sich die Breite des Rotorspaltes 18 verändert, wogegen die Breite der Spalten 16 und 17 unabhängig von der Temperatur konstant oder im Wesentlichen konstant bleibt. Dies ist mit ein Grund, dass der Druckwellenlader 1 einen hohen Wirkungsgrad aufweist.

Der in Figur 8 dargestellte Druckwellenlader 1 könnte jedoch auch einstückig ausgestaltet sein, das heisst ohne Rotorspalt 18, wie dies zum Beispiel in Figur 1 dargestellt ist.

Der in Figur 8 dargestellte Druckwellenlader 1 umfasst im Heissgasgehäuse 7 einen Wärmetauscher 7c welcher derart ausgestaltet ist, dass zumindest das erste Lager 13 kühlbar ist, wobei der Wärmetauscher 7c Kühlkanäle 7d aufweist, welche innerhalb des Heissgasgehäuses 7 verlaufen. Das Heissgasgehäuse 7 umfasst eine Lagersitzwand 7n, welche auf der dem ersten Lager 13 zugewandten Seite als ein Lagersitz 7o für das erste Lager 13 ausgestaltet ist, wobei das erste Lager 13 im Lagersitz 7o angeordnet ist, und wobei die Lagersitzwand 7n auf der dem ersten Lager 13 abgewandten Seite Teil einer Kühlkanalaussenwand 7p eines Kühlkanals 7d des Wärmetauschers 7c bildet. Vorteilhafterweise umfasst die Lagersitzwand 7n eine Stirnseite 7q sowie ausgehend von der Stirnseite 7q einen hohlzylinderförmigen Lagerabschnitt 7r, wobei die Stirnseite 7q und der Lagerabschnitt 7r den Lagersitz 7o ausbildet, und wobei sowohl die Stirnseite 7q als auch der hohlzylinderförmige Lagerabschnitt 7r Teil der Kühlkanalaussenwand 7p bilden. Diese Ausgestaltung ist besonders vorteilhaft, weil ein Wärmefluss vom Heissgasgehäuse 7 zum Lagersitz 7o stark reduziert ist. Vorteilhafterweise wird dadurch ein Wärmeeintrag vom ersten Lager 13 auf den Zellenrotor 8 verhindert. Besonders vorteilhaft wird der Lagersitz 7o derart stark gekühlt, dass über das erste Lager 13 Wärme zudem aus dem Zellenrotor 8 abgeführt werden kann. Der Zellenrotor 8 kann derart besonders vorteilhaft gekühlt werden. Vorteilhafterweise ist die Lagersitzwand 7n über eine Dünnstelle 7s beziehungsweise eine Brücke mit dem restlichen Heissgasgehäuse 7 verbunden, um einen Wärmefluss vom restlichen Heissgasgehäuse auf die Lagersitzwand 7n zu reduzieren.

In einer vorteilhaften Ausgestaltung umfasst der Druckwellenlader 1, falls dieser einen geteilten Rotor 8 aufweist, eine Mehrzahl von Labyrinthdichtungen 26, wie dies beispielhaft und schematisch in Figur 8 dargestellt ist. Die Labyrinthdichtungen 26 sind beispielsweise auf der Innenseite des Rotorgehäuses 11 und/oder auf der Aussenseite der Zellenrotoraussenwand 8e angeordnet, wobei in Figur 8 nur die am Rotorgehäuse 11 angeordneten Labyrinthdichtungen 26 dargestellt sind. Die Labyrinthdichtungen 26 erstrecken sich in Umfangsrichtung um 360°, wobei der Einfachheit halber in Figur 8 die Labyrinthdichtungen 26 nur unten im Rotorgehäuse 11 dargestellt sind. Die Labyrinthdichtungen 26 würden jedoch auch oben im Rotorgehäuse 11 verlaufen. Die Labyrinthdichtung 26 ist vorteilhafterweise zumindest im Bereich des Spaltes 18 angeordnet, um im Bereich zwischen Spalt 18 und Rotorgehäuses 11 ein Austreten des Fluides durch den Spalt 18 aus der Rotorzelle 10 zu vermeiden. Vorteilhafterweise sind zudem noch zwei jeweils in Umfangsrichtung um 360° verlaufende Labyrinthdichtungen 26 in Endbereich des Zellenrotors 8 angeordnet, wie in Figur 8 dargestellt, um ein Eindringen von Fluid in den Spalt zwischen Zellenrotoraussenwand 8e und der Innenseite des Rotorgehäuses 11 zu vermeiden.

Vorteilhafterweise weist der Wärmetauscher 7c einen Kühlkanal 7e auf, welcher den Hochdruckabgaskanal 4 zumindest entlang eines Kühlabschnittes 4b vollständig umschliesst, sodass die Aussenwand des Hochdruckabgaskanals 4 zugleich ein Teil der Kühlkanalaussenwand 7p bildet. Besonders vorteilhaft bildet die Dünnstelle 7s beziehungsweise die Brücke wie in Figur 8 dargestellt beidseitig eine Kühlkanalaussenwand 7p, was einen Wärmefluss vom restlichen Heissgasgehäuse auf die Lagersitzwand 7n zusätzlich reduziert.

Vorteilhafterweise weist der Wärmetauscher 7c zudem einen Kühlkanal 7e auf, welcher den Niederdruckabgaskanal 5 zumindest entlang eines Kühlabschnittes 5b vollständig umschliesst, sodass die Aussenwand des Niederdruckabgaskanals 5 zugleich ein Teil der Kühlkanalaussenwand 7p bildet.

In einer vorteilhaften Ausgestaltung kann zudem ein Ölkreislauf 30 umfassend Ölleitungen 30a vorgesehen sein, um das erste und/oder das zweite Lager 13, 14 mit Öl zu versorgen, wobei in Figur 8 die im dazu erforderlichen, im Heissgasgehäuse 7 und/oder im Kaltgasgehäuse 6 verlaufenden Ölleitungen nicht dargestellt sind.

Figur 11 zeigt eine Seitenansicht eines geteilten Zellenrotors 8, der in Verlaufsrichtung der Rotorwelle 12 zweiteilig ausgestaltet ist und ein erstes Zellenrotorteil 8a und ein zweites Zellenrotorteil 8b aufweist. Die Zellenrotorteile 8a, 8b sind derart mit der Rotorwelle 12 verbunden, dass diese bei einer Erwärmung nur zur Mitte hin eine Ausdehnungsbewegung 8c, 8d aufweisen, sodass sich die Spaltbreite 18 reduziert. Vorzugsweise verändert sich die Lage der Zellenrotorteile 8a, 8b bezüglich der Rotorwelle 12 zur Stirnseite des Zellenrotors 8 nicht, sodass eine konstante oder im Wesentlichen konstante Spaltbreite zwischen der Stirnfläche des Heissgasgehäuses, und dem Zellenrotor gewährleistet ist.

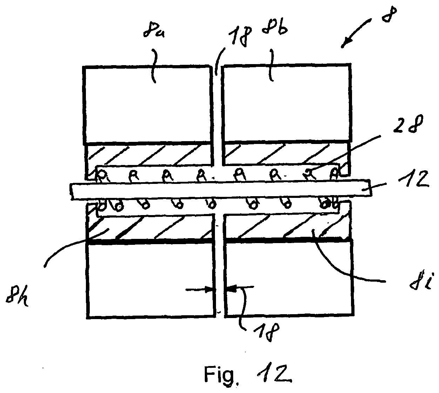

Figur 12 zeigt einen Zellenrotor 8 umfassend ein erstes Zellenrotorteil 8a mit einem ersten Lagerteil 8h und ein zweites Zellenrotorteil 8b mit einem zweiten Lagerteil 8i, wobei die beiden Zellenrotorteile 8a, 8b beziehungsweise die beiden Lagerteile 8h, 8i einen gegenseitigen Spalt 18 ausbilden. Die Lagerteile 8h, 8i sind bezüglich der Rotorwelle 12 verschiebbar gelagert. Die Lagerteile 8h, 8i weisen eine Ausnehmung auf, innerhalb welcher eine gespannte Feder 28 angeordnet ist, welche die beiden Lagerteile 8h, 8i und damit die beiden Zellenrotorteile 8a, 8b voneinander wegdrückt, sodass die Zellenrotorteile 8a, 8b mit deren Stirnseiten an der Stirnseite 7f des Heissgasgehäuses 7 beziehungsweise an der Stirnseite 6c des Kaltgasgehäuses 6 beinahe anliegt, sodass sich dazwischen nur ein geringer Spalt 16, 17 ausbildet. Eine Erwärmung des Zellenrotors 8 hat zur Folge, dass sich die Zellenrotorteile 8a, 8b ausdehnen, sodass sich der Spalt 18 verkleinert. Eine Abkühlung des Zellenrotors 8 hat zur Folge, dass sich der Spalt 18 vergrössert. Die in Figur 12 dargestellte Ausführungsform weist den Vorteil auf, dass der Spalt 16 zwischen der Stirnseite 7f des Heissgasgehäuses 7 und dem ersten Zellenrotorteil 8a konstant oder im Wesentlichen konstant bleibt, unabhängig von der Temperatur des Zellenrotorteils 8a, da die sich auf Grund der Erwärmung ergebende Änderung der Länge des Zellenrotorteils 8a bezüglich der Breite des Spaltes 18 auswirkt.

In einer vorteilhaften Ausgestaltung besteht das erste Zellenrotorteil 8a aus einem wärmefesteren Material als das zweite Zellenrotorteil 8b. Während dem Betrieb den Druckwellenladers 1 könnte das erste Zellenrotorteil 8a beispielsweise eine Temperatur von etwa 800 °C aufweisen, wogegen das zweite Zellenrotorteil 8b eine Temperatur von nur etwa 200°C aufweist. Der Spalt 18 verhindert eine durchgehende Wärmeleitung in Verlaufsrichtung des Zellenrotors 8, sodass die Zellenrotorteile 8a, 8b stark unterschiedliche Temperaturen aufweisen können. Daher ist es auch möglich das zweite Zellenrotorteil 8b aus einem reduziert wärmefesten Material zu fertigen, beispielsweise auch aus einem Kunststoff. Ein derartiger Zellenrotor 18 ist kostengünstiger und vorzugsweise auch leichter.

Vorteilhafterweise wird der durch den Hochdruckabgaskanal 4 strömende Abgasstrom 4a des Verbrennungsmotors gekühlt. Vorteilhafterweise umschliesst ein Kühlkanal 7e den Hochdruckabgaskanal 4 zumindest entlang eines Kühlabschnittes 4b vollständig, sodass der Hochdruckabgaskanal 4 beim Kühlabschnitt 4b entlang der gesamten Umfangsfläche gekühlt wird.

## Patentansprüche

1. Druckwellenlader (1) zum Verdichten von Frischluft (2a) für einen Verbrennungsmotor, umfassend ein Kaltgasgehäuse (6), ein Heissgasgehäuse (7) sowie ein dazwischen angeordnetes Rotorgehäuse (11), wobei innerhalb des Rotorgehäuses (11) ein rotierbarer Zellenrotor (8) angeordnet ist, und wobei das Heissgasgehäuse (7) einen Hochdruckabgaskanal (4) und einen Niederdruckabgaskanal (5) umfasst, und wobei das Kaltgasgehäuse (6) einen Frischluftkanal (2) und einen Ladeluftkanal (3) umfasst, und wobei der Hochdruckabgaskanal (4), der Niederdruckabgaskanal (5), der Frischluftkanal (2) und der Ladeluftkanal (3) Fluid leitend mit dem Zellenrotor (8) verbunden sind, wobei das Heissgasgehäuse (7) ein erstes Lager (13) und das Kaltgasgehäuse (6) ein zweites Lager (14) umfasst, und wobei der Zellenrotor (8) eine Rotorwelle (12) umfasst, welche im ersten und im zweiten Lager (13,14) gelagert ist, wobei das Rotorgehäuse (11) als ein einstückiges, rohrförmiges Mantelgehäuse ausgestaltet ist, welches mit dem Heissgasgehäuse (7) sowie dem Kaltgasgehäuse (6) verbunden ist, und dass das Heissgasgehäuse (7) einen Wärmetauscher (7c) umfasst welcher derart ausgestaltet ist, dass zumindest das erste Lager (13) kühlbar ist, wobei der Wärmetauscher (7c) Kühlkanäle (7d) aufweist, welche innerhalb des Heissgasgehäuses (7) verlaufen, wobei das Heissgasgehäuse (7) eine Lagersitzwand (7n) umfasst, welche auf der dem ersten Lager (13) zugewandten Seite als ein Lagersitz (7o) für das erste Lager (13) ausgestaltet ist, wobei das erste Lager (13) im Lagersitz (7o) angeordnet ist, und dass die Lagersitzwand (7n) auf der dem ersten Lager (13) abgewandten Seite Teil einer Kühlkanalaussenwand (7p) eines Kühlkanals (7d) des Wärmetauschers (7c) bildet, wobei die Lagersitzwand (7n) eine Stirnseite (7q) sowie ausgehend von der Stirnseite (7q) einen hohlzylinderförmigen Lagerabschnitt (7r) aufweist, wobei die Stirnseite (7q) und der Lagerabschnitt (7r) den Lagersitz (7o) ausbildet, **dadurch gekennzeichnet, dass** sowohl die Stirnseite (7q) als auch der hohlzylinderförmige Lagerabschnitt (7r) Teil der Kühlkanalaussenwand (7p) bilden.

2. Druckwellenlader nach einem der vorhergehenden Ansprüche, **dadurch gekennzeichnet, dass** der Wärmetauscher (7c) einen Kühlkanal (7e) aufweist, welcher den Hochdruckabgaskanal (4) zumindest Abschnittweise vollständig umschliesst, sodass die Aussenwand des Hochdruckabgaskanals (4) zugleich ein Teil der Kühlkanalaussenwand (7p) bildet.

3. Druckwellenlader nach Anspruch 2, **dadurch gekennzeichnet, dass** der Wärmetauscher (7c) einen Kühlkanal (7e) aufweist, welcher den Niederdruckabgaskanal (5) zumindest Abschnittweise vollständig umschliesst, sodass die Aussenwand des Niederdruckabgaskanals (5) zugleich ein Teil der Kühlkanalaussenwand (7p) bildet.

4. Druckwellenlader nach einem der vorhergehenden Ansprüche, **dadurch gekennzeichnet, dass** der Wärmetauscher (7c) derart ausgestaltet ist, dass der Hochdruckabgaskanal (4) kühlbar ist, wobei vorgängig das erste Lager (13) gekühlt ist und nachfolgend der Hochdruckabgaskanal (4).

5. Druckwellenlader nach einem der vorhergehenden Ansprüchen, **dadurch gekennzeichnet, dass** der Wärmetauscher (7c) derart ausgestaltet ist, dass auch der Niederdruckabgaskanal (5) kühlbar ist.

6. Druckwellenlader nach einem der vorhergehenden Ansprüche, **dadurch gekennzeichnet, dass** der Wärmetauscher (7c) einen Wasserkreislauf zur Kühlung umfasst.

7. Druckwellenlader nach einem der vorhergehenden Ansprüche, **dadurch gekennzeichnet, dass** ein zusätzlicher Wärmetauscher (24) eine Hochdruckabgaszufuhrleitung (25) kühlt, wobei die Hochdruckabgaszufuhrleitung (25) im Abgasflussrichtung vorgängig dem Hochdruckabgaskanal (4) angeordnet ist.

8. Druckwellenlader nach einem der vorhergehenden Ansprüche, **dadurch gekennzeichnet, dass** zumindest das erste Lager (13) oder das zweite Lager (14) als ein Wälzlager ausgestaltet ist.

9. Druckwellenlader nach einem der vorhergehenden Ansprüche, **dadurch gekennzeichnet, dass** zumindest das erste Lager (13) eine Öl- oder Fettschmierung aufweist.

10. Druckwellenlader nach Anspruch 7, **dadurch gekennzeichnet, dass** der Heissgasgehäuse (7) einen Ölkreislauf (30) umfasst, welcher das erste Lager (13) mit Öl versorgt.

11. Druckwellenlader nach einem der vorhergehenden Ansprüche, **dadurch gekennzeichnet, dass** der Zellenrotor (8) in Verlaufsrichtung der Rotorwelle (12) zumindest zweiteilig ausgestaltet ist und ein erstes Zellenrotorteil (8a) und ein zweites Zellenrotorteil (8b) umfasst, wobei die beiden Zellenrotorteile (8a, 8b) in Verlaufsrichtung der Rotorwelle (12) gegenseitig beabstandet sind.

12. Druckwellenlader nach einem der vorhergehenden Ansprüche, dass zwischen dem Kaltgehäuse (6) und dem Rotorgehäuse (11) und/oder zwischen dem Heissgasgehäuse (7) und dem Rotorgehäuse (11) ein Dichtring (27) zur Abdichtung angeordnet sind, und dass der Dichtring (27) aus Metall oder Kunststoff besteht.

13. Druckwellenlader nach einem der vorhergehenden Ansprüche, **dadurch gekennzeichnet, dass** das Heissgasgehäuse (7) aus Aluminium oder einer Leichtmetalllegierung gefertigt ist.

## Claims

1. Pressure wave supercharger (1) for compressing fresh air (2a) for an internal combustion engine, comprising a cold gas housing (6), a hot gas housing (7), and a rotor casing (11), which is arranged therebetween, wherein a rotatable cell rotor (8) is arranged within the rotor casing (11), and wherein the hot gas housing (7) comprises a high-pressure exhaust duct (4) and a low-pressure exhaust duct (5), and wherein the cold gas housing (6) comprises a fresh air duct (2) and a charge air duct (3), and wherein the high-pressure exhaust duct (4), the low-pressure exhaust duct (5), the fresh air duct (2) and the charge air duct (3) are fluidically connected to the cell rotor (8), wherein the hot gas housing (7) comprises a first bearing (13), and the cold gas housing (6) comprises a second bearing (14), and wherein the cell rotor (8) comprises a rotor shaft (12), which is mounted in the first and second bearings (13, 14), wherein the rotor casing (11) is designed as an integral tubular barrel casing, which is connected to the hot gas housing (7) and the cold gas housing (6), and in that the hot gas housing (7) comprises a heat exchanger (7c), which is designed in such a way that at least the first bearing (13) can be cooled, wherein the heat exchanger (7c) has cooling ducts (7d), which extend within the hot gas housing (7), wherein the hot gas housing (7) comprises a bearing seat wall (7n), which, on the side facing the first bearing (13), is designed as a bearing seat (7o) for the first bearing (13), wherein the first bearing (13) is arranged in the bearing seat (7o), and in that, on the side facing away from the first bearing (13), the bearing seat wall (7n) forms part of a cooling duct outer wall (7p) of a cooling duct (7d) of the heat exchanger (7c), wherein the bearing seat wall (7n) has an end (7q) and, starting from the end (7q), a bearing section (7r) in the form of a hollow cylinder, wherein the end (7q) and the bearing section (7r) forms the bearing seat (7o), **characterized in that** both the end (7q) and the bearing section (7r) in the form of a hollow cylinder form part of the cooling duct outer wall (7p) .

2. Pressure wave supercharger according to one of the preceding claims, **characterized in that** the heat exchanger (7c) has a cooling duct (7e), which completely surrounds the high-pressure exhaust duct (4), at least in some section or sections, with the result that the outer wall of the high-pressure exhaust duct (4) simultaneously forms part of the cooling duct outer wall (7p).

3. Pressure wave supercharger according to Claim 2, **characterized in that** the heat exchanger (7c) has a cooling duct (7e) which completely surrounds the low-pressure exhaust duct (5), at least in some section or sections, with the result that the outer wall of the low-pressure exhaust duct (5) simultaneously forms part of the cooling duct outer wall (7p).

4. Pressure wave supercharger according to one of the preceding claims, **characterized in that** the heat exchanger (7c) is designed in such a way that the high-pressure exhaust duct (4) can be cooled, wherein the first bearing (13) is cooled first and then the high-pressure exhaust duct (4).

5. Pressure wave supercharger according to one of the preceding claims, **characterized in that** the heat exchanger (7c) is designed in such a way that the low-pressure exhaust duct (5) can also be cooled.

6. Pressure wave supercharger according to one of the preceding claims, **characterized in that** the heat exchanger (7c) comprises a water circuit for cooling.

7. Pressure wave supercharger according to one of the preceding claims, **characterized in that** an additional heat exchanger (24) cools a high-pressure exhaust feed line (25), wherein the high-pressure exhaust feed line (25) is arranged upstream of the high-pressure exhaust duct (4) in the exhaust gas flow direction.

8. Pressure wave supercharger according to one of the preceding claims, **characterized in that** at least the first bearing (13) or the second bearing (14) is designed as a rolling bearing.

9. Pressure wave supercharger according to one of the preceding claims, **characterized in that** at least the first bearing (13) has an oil or grease lubrication system.

10. Pressure wave supercharger according to Claim 7, **characterized in that** the hot gas housing (7) comprises an oil circuit (30), which supplies the first bearing (13) with oil.

11. Pressure wave supercharger according to one of the preceding claims, **characterized in that** the cell rotor (8) is of at least two-part design in the direction of extent of the rotor shaft (12) and comprises a first cell rotor part (8a) and a second cell rotor part (8b), wherein the two cell rotor parts (8a, 8b) are spaced apart in the direction of extent of the rotor shaft (12).

12. Pressure wave supercharger according to one of the preceding claims, in that a sealing ring (27) for sealing is arranged between the cold housing (6) and the rotor casing (11) and/or between the hot gas housing (7) and the rotor casing (11), and in that the sealing ring (27) is composed of metal or plastic.

13. Pressure wave supercharger according to one of the preceding claims, **characterized in that** the hot gas housing (7) is manufactured from aluminum or a light metal alloy.

## Revendications

1. Compresseur à ondes de pression (1) pour la compression d'air frais (2a) pour un moteur à combustion interne, comprenant un boîtier de gaz froid (6), un boîtier de gaz chaud (7) ainsi qu'un boîtier de rotor (11) disposé entre eux, un rotor à cellules (8) rotatif étant disposé à l'intérieur du boîtier de rotor (11), et le boîtier de gaz chaud (7) comprenant un canal de gaz d'échappement haute pression (4) et un canal de gaz d'échappement basse pression (5), et le boîtier de gaz froid (6) comprenant un canal d'air frais (2) et un canal d'air de suralimentation (3), et le canal de gaz d'échappement haute pression (4), le canal de gaz d'échappement basse pression (5), le canal d'air frais (2) et le canal d'air de suralimentation (3) étant connectés fluidiquement au rotor à cellules (8), le boîtier de gaz chaud (7) comprenant un premier palier (13) et le boîtier de gaz froid (6) comprenant un deuxième palier (14), et le rotor à cellules (8) comprenant un arbre de rotor (12) qui est supporté dans le premier et dans le deuxième palier (13, 14), le boîtier de rotor (11) étant configuré sous la forme d'un boîtier d'enveloppe de forme tubulaire d'une seule pièce qui est connecté au boîtier de gaz chaud (7) ainsi qu'au boîtier de gaz froid (6), et en ce que le boîtier de gaz chaud (7) comprend un échangeur de chaleur (7c) qui est configuré de telle sorte qu'au moins le premier palier (13) puisse être refroidi, l'échangeur de chaleur (7c) présentant des canaux de refroidissement (7d) qui s'étendent à l'intérieur du boîtier de gaz chaud (7), le boîtier de gaz chaud (7) comprenant une paroi de siège de palier (7n) qui est réalisée du côté tourné vers le premier palier (13) sous la forme d'un siège de palier (7o) pour le premier palier (13), le premier palier (13) étant disposé dans le siège de palier (7o) et en ce que la paroi de siège de palier (7n) forme du côté opposé au premier palier (13) une partie d'une paroi de sortie de canal de refroidissement (7p) d'un canal de refroidissement (7d) de l'échangeur de chaleur (7c), la paroi de siège de palier (7n) présentant un côté frontal (7q) et, partant du côté frontal (7q), une portion de palier de forme cylindrique creuse (7r), le côté frontal (7q) et la portion de palier (7r) constituant le siège de palier (7o), **caractérisé en ce que** le côté frontal (7q) ainsi que la portion de palier de forme cylindrique creuse (7r) forment une partie de la paroi extérieure du canal de refroidissement (7p).

2. Compresseur à ondes de pression selon l'une quelconque des revendications précédentes, **caractérisé en ce que** l'échangeur de chaleur (7c) présente un canal de refroidissement (7e) qui entoure complètement le canal de gaz d'échappement haute pression (4) au moins en partie de telle sorte que la paroi extérieure du canal de gaz d'échappement haute pression (4) forme en même temps une partie de la paroi extérieure du canal de refroidissement (7p).

3. Compresseur à ondes de pression selon la revendication 2, **caractérisé en ce que** l'échangeur de chaleur (7c) présente un canal de refroidissement (7e) qui entoure complètement le canal de gaz d'échappement basse pression (5) au moins en partie de telle sorte que la paroi extérieure du canal de gaz d'échappement basse pression (5) forme en même temps une partie de la paroi extérieure du canal de refroidissement (7p).

4. Compresseur à ondes de pression selon l'une quelconque des revendications précédentes, **caractérisé en ce que** l'échangeur de chaleur (7c) est configuré de telle sorte que le canal de gaz d'échappement haute pression (4) puisse être refroidi, le premier palier (13) étant refroidi en premier, suivi du canal de gaz d'échappement haute pression (4).

5. Compresseur à ondes de pression selon l'une quelconque des revendications précédentes, **caractérisé en ce que** l'échangeur de chaleur (7c) est configuré de telle sorte que le canal de gaz d'échappement basse pression (5) puisse également être refroidi.

6. Compresseur à ondes de pression selon l'une quelconque des revendications précédentes, **caractérisé en ce que** l'échangeur de chaleur (7c) comprend un circuit d'eau pour le refroidissement.

7. Compresseur à ondes de pression selon l'une quelconque des revendications précédentes, **caractérisé en ce qu'**un échangeur de chaleur supplémentaire (24) refroidit une conduite d'alimentation en gaz haute pression (25), la conduite d'alimentation en gaz d'échappement haute pression (25) étant disposée dans la direction du flux de gaz d'échappement avant le canal de gaz d'échappement haute pression (4).

8. Compresseur à ondes de pression selon l'une quelconque des revendications précédentes, **caractérisé en ce qu'**au moins le premier palier (13) ou le deuxième palier (14) est configuré sous forme de palier à roulement.

9. Compresseur à ondes de pression selon l'une quelconque des revendications précédentes, **caractérisé en ce qu'**au moins le premier palier (13) présente une lubrification à huile ou graisse.

10. Compresseur à ondes de pression selon la revendication 7, **caractérisé en ce que** le boîtier de gaz chaud (7) comprend un circuit d'huile (30) qui alimente en huile le premier palier (13).

11. Compresseur à ondes de pression selon l'une quelconque des revendications précédentes, **caractérisé en ce que** le rotor à cellules (8) est configuré au moins en deux parties dans la direction d'écoulement de l'arbre de rotor (12) et comprend une première partie de rotor à cellules (8a) et une deuxième partie de rotor à cellules (8b), les deux parties de rotor à cellules (8a, 8b) étant espacées en sens inverse dans la direction d'étendue de l'arbre de rotor (12).

12. Compresseur à ondes de pression selon l'une quelconque des revendications précédentes, en ce qu'entre le boîtier froid (6) et le boîtier de rotor (11) et/ou entre le boîtier de gaz chaud (7) et le boîtier de rotor (11) est disposée une bague d'étanchéité (27) pour réaliser l'étanchéité, et en ce que la bague d'étanchéité (27) se compose de métal ou de plastique.

13. Compresseur à ondes de pression selon l'une quelconque des revendications précédentes, **caractérisé en ce que** le boîtier de gaz chaud (7) est fabriqué en aluminium ou en un alliage de métal léger.
